# EUROPÄISCHE PATENTSCHRIFT

(11) **EP 0 685 729 B1**
(45) Veröffentlichungstag und Bekanntmachung des Hinweises auf die Patenterteilung: **09.12.1998**
(21) Anmeldenummer: 94108465.9
(22) Anmeldetag: 01.06.1994
(51) Int. Cl.: G01N 21/31, G01N 21/39, G01J 3/433

(54) **Spektroskopisches Verfahren zur Messung kleinster spezifischer Absorptionssignale**
Spectroscopic method for measuring weak absorptions
Procédé spectroscopique de mesure des absorptions très faibles

(43) Veröffentlichungstag der Anmeldung: 06.12.1995
(73) Patentinhaber: LASERSPEC ANALYTIK GmbH, 80807 München (DE)
(72) Erfinder: Zybin, Alexandre, Dr. c/o Inst. f. Spektroskopie, 142092 Troitzk, Region Moskau (RU); Niemax, Kay, Prof.,Dr. c/o Universität Hohenheim, D-70599 Stuttgart (DE); Schnürer-Patschan, Christoph, Dr., D-80802 München (DE)
(74) Vertreter: Heusler, Wolfgang, Dipl.-Ing.

(56) Entgegenhaltungen:
- US-A- 4 934 816
- US-A- 5 267 019
- JOURNAL OF THE OPTICAL SOCIETY OF AMERICA B (OPTICAL PHYSICS), MAI 1989, USA, BAND 6, NR. 5, SEITEN 871 - 876, ISSN 0740-3224 Lian-Guo Wang et al 'High-sensitivity frequency-modulation spectroscopy with a GaAlAs diode laser'
- JOURNAL OF PHYSICS D (APPLIED PHYSICS), 14 FEB. 1993, UK, BAND. 26, NR. 2, SEITEN 199 - 202, ISSN 0022-3727 Maruyama K et al 'Measurement of the CF3 radical using infrared diode laser absorption spectroscopy'
- APPLIED SPECTROSCOPY, Bd.47, Nr.3, März 1993, BALTIMORE US Seiten 300 - 304 CHANGKANG PAN ET AL 'Direct determination of trace elements in graphite matrices using modulated glow discharge atomic absorption spectrometry'
- ANALYTICAL CHEMISTRY, Bd.61, Nr.21, November 1989, COLUMBUS US Seiten 1217A - 1223A MOERNER W E ET AL 'Finding a single molecule in a haystack: optical detection and spectroscopy of single absorbers in solids'

## Beschreibung

Die Erfindung betrifft ein Verfahren zur Messung der Absorption oder der Reflexion elektromagnetischer Strahlung durch eine Materialprobe nach dem Oberbegriff des Anspruchs 1 und eine Vorrichtung zu seiner Durchführung.

In der optischen Spektroskopie stellt sich häufig das Problem der Bestimmung kleinster Signale oder Signaländerungen optischer Parameter wie der Absorption oder der Reflexion von elektromagnetischer Strahlung an einer Materialprobe. Als ein empfindliches Verfahren der qualitativen und quantitativen Bestimmung von Spurenelementen in einer Materialprobe wird die Absorptionsspektroskopie eingesetzt. Die Nachweisgrenze der Absorptionsspektroskopie ergibt sich aus der minimal detektierbaren Absorption, welche durch das Signal/Rauschverhältnis bestimmt wird. Durch den Einsatz von Modulationstechniken (periodischer Änderung charakteristischer Größen, wie z. B. Amplitude, Wellenlänge etc., und zur Modulation korrelierte Messung des Signals) geliiigt es, frequenzabhängige Rauschsignale (Flickerrauschen) zu unterdrücken bzw. zu verkleinern. Die resultierende Verbesserung des Signal/Rauschverhältnisses bewirkt eine Senkung der Nachweisgrenze.

Eine weit verbreitete Technik ist die periodische Modulation der Wellenlänge elektromagnetischer Strahlung, die bei Verwendung von Laserdioden als Lichtquellen durch eine periodische Änderung des Laserdiodenstromes erfolgen kann (s.z.B. J.A. Silver, Applied Optics 31, 707 (1992) und die dort angegebene Literatur). Eine solcher Art modulierte Laserstrahlung durchstrahlt eine Materialprobe, z.B. ein Gas- oder Plasma, und trifft einen Strahlungsdetektor, z.B. eine Photodiode, in dem ein Photostrom erzeugt wird. Der Strahlungsdetektor wird mit einem Lock-in-Verstärker, der auf die Modulationsfrequenz oder deren ganzzahlige Vielfache der Laserstrahlung eingestellt wird, verbunden. Durch die Wellenlängenmodulation der Laserdiodenstrahlung im kHz-Bereich ist es möglich, Absorptionen im Bereich von etwa 10⁻⁵ (bei einer Detektionsbandbreite von 1 Hz) zu messen.

Die genannte Nachweisgrenze von 10⁻⁵ wird durch nicht-spezifische Untergrundsignale bestimmt, die durch Interferenz- und Etaloneffekte sowie durch die Amplitudenmodulation der Laserdiodenstrahlung verursacht werden. Die Modulation des Laserdiodenstromes bewirkt nämlich neben der Modulation der Wellenlänge auch eine Modulation der Amplitude. Die Schwankungen der genannten Untergrundsignale bestimmen das Signal/Rauschverhältnis an der Nachweisgrenze.

Aus der Publikation von W. E. Moerner et al. (Analytical Chemistry, Band 61, November 1989, S. 1217A ff.) ist eine hochempfindliche Absorptionstechnik bekannt, bei der eine erste Modulation der Emission eines Farbstofflasers und eine zweite Modulation eines Parameters der zu vermessenden Probe realisiert sind. Die erste Modulation ist eine Frequenzmodulation im MHz-Bereich, die zur Bildung von diskreten Seitenbändern der vom Farbstofflaser emittierten Strahlung führt. Die zweite Modulation liegt im kHz-Bereich. Die erste Modulation wird durch einen elektrooptischen Modulator realisiert. Die Detektion erfolgt durch getrennte phasensensitive Verstärker, die an die jeweiligen Modulationsfrequenzen angepaßt sind.

Es ist die Aufgabe der Erfindung, eine verbesserte Doppelmodulations-Meßtechnik anzugeben, mit der die Nachweisgrenze kleinste Absortpions- oder Reflexionssignale oder Signaländerungen bei spektroskopischen Messungen zu senken.

Die Aufgabe wird durch ein Verfahren gemäß Patentanspruch 1 bzw. eine Vorrichtung gemäß Patentanspruch 7 gelöst. Vorteilhafte Ausführungsformen der Erfindung ergeben sich aus den abhängigen Ansprüchen.

Die Erfindung hat den Vorteil, daß durch eine zweite unabhängige Modulation eines weiteren Parameters des Meßsystems die genannten Schwankungen überwunden werden können, und eine minimal detektierbare Absorption um 1-2 Größenordnungen gesenkt werden kann. Dieser Parameter kann z.B. die Absorptionslänge in der Materialprobe sein.

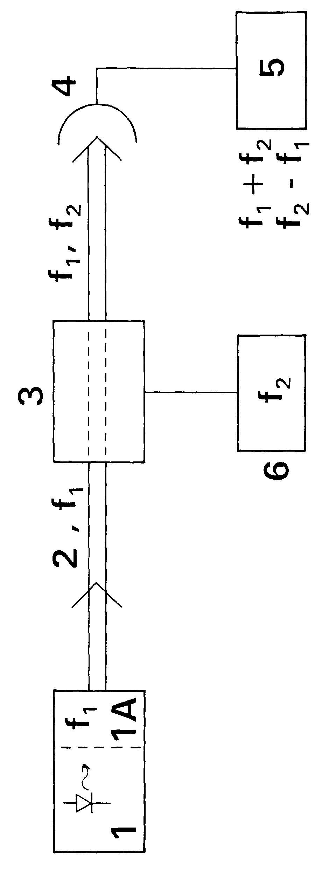

In der Figur ist beispielhaft und schematisch eine Ausführungsform der Erfindung dargestellt.

Ein Halbleiterlaser 1 emittiert ein schmalbandiges Strahlungsbündel 2 bei einer Wellenlänge λ und enthält eine Vorrichtung 1A, durch die dem Strahlungsbündel 2 eine Modulation bei einer ersten Frequenz f₁ aufgeprägt wird. Die Vorrichtung 1A ist im Falle eines Halbleiterlasers als Lichtquelle 1 vorzugsweise ein Frequenzgenerator, mit dem der Injektionsstrom des Halbleiterlasers mit der Frequenz f₁ moduliert wird. Dies geschieht in der Weise, daß zu einem DC-Strom konstanter Stromstärke ein mit der Frequenz f₁ zeitabhängiger Strom addiert wird. In diesem Falle wird sowohl die Wellenlänge als auch die Amplitude des Strahlungsbündels 2 mit der Frequenz f₁ moduliert. Die Vorrichtung 1A kann aber auch ein mechanischer Uiiterbrecher (Chopper) sein, wobei dann nur die Amplitude des Strahlungsbündels 2 mit der Frequenz f₁ moduliert wird.

Das Strahlungsbündel tritt dann durch eine zu untersuchende Materialprobe 3, deren Absorption bei der Wellenlänge λ gemessen werden soll und trifft auf einen Strahlungsdetektor, z.B. eine Photodiode. Der von dem Strahlungsdetektor erzeugte Photostrom wird einem Lock-in-Verstärker 5 zugeführt, mit dem eine frequenzselektive Messung durchgeführt wird.

Wenn der Lock-in-Verstärker 5 auf die Frequenz f₁ eingestellt wird, so entspricht der bis hierher beschriebene Aufbau einem Meßsystem nach dem Stand der Technik, mit dem beispielsweise Spurenelemente in einem Gas- oder Plasma als Materialprobe 3 nachgewiesen werden können.

Zur Verbesserung des Signal/Rausch-Verhältnisses wird nun aber eine zusätzliche Modulation bei einer zweiten Frequenz f₂ eingeführt. Wichtig ist hierbei, daß neben der Wellenlänge oder der Amplitude der von dem Halbleiterlaser emittierten Strahlung ein weiterer Parameter des Meßsystems gefunden wird, von dem die Amplitude der auf den Detektor 4 auftreffenden Strahlung ebenfalls abhängig ist. Dieser Parameter wird mit einer Frequenz f₂ moduliert. Der Lock-in-Verstärker wird dann auf die Summen- oder die Differenzfrequenz der beiden Modulationsfrequenzen f₁ und f₂ oder ganzzahlige Vielfache davon eingestellt.

Gemäß der in der Figur gezeigten Ausführungsform der vorliegenden Erfindung wird als weiterer Modulationsgröße eine Eigenschaft der Materialprobe 3 verwendet. Vorzugsweise ist dies eine optische Eigenschaft der Probe, wie z.B. ihre optische Tiefe bei der Wellenlänge λ. Die optische Tiefe ist das Produkt aus Absorptionslänge, Zahl der absorbierenden Teilchen (Besetzungsdichte) und Absorptionsquerschnitt. Von diesen Größen können die Absorptionslänge und die Besetzungsdichte in besonders vorteilhafter Weise variiert werden. Die Besetzungsdichte kann beispielsweise in Plasmen (stromführenden und nicht-stromführenden) durch Variation der eingekoppelten Leistung moduliert werden. Vielfach ist mit der Leistungsmodulation ebenfalls eine Absorptionslängenänderung verbunden. Für beliebige Absorptionsvolumina kann durch Änderung des Lichtweges (z. B. Mehrfachdurchgänge, realisierbar mit elektrisch verstellbaren Spiegelsystemen) die Absorptionslänge moduliert werden.

Ein Beispiel für die Realisierung des beschriebenen Verfahrens ist die Bestimmung von Elementspuren in Gasen. Zur Erzeugung freier Atome und gegebenenfalls angeregter Atome in metastabilen Zuständen ist es notwendig, die zu bestimmenden Komponenten in ein Plasma, z.B. ein Mikrowellenplasma, einzubringen. Die Laserdiodenstrahlung wird durch das Plasma geleitet und auf eine spezifische Absorptionslinie der zu bestimmenden Komponente eingestellt. Die Modulation der emittierten Wellenlänge der Laserdiode erfolgt durch Stromvariation. Die Modulation der Absorption im Absorptionsvolumen (Plasma) durch Veränderung der in das Plasma eingekoppelten Leistung. Das Signal wird mit einer Photodiode detektiert und mit einem Lock-in-Verstärker auf der Summen- oder Differenzfrequenz der Modulationen oder ganzzahligen Vielfachen dieser Frequenzen ausgewertet.

Die Modulationsfrequenz f₁ liegt vorzugsweise im kHz-Bereich und die Modulationsfrequenz f₂ im Bereich einiger 100 kHz bis in den Bereich MHz.

Alternativ zu der in der Figur gezeigten Ausführungsform ist aber auch denkbar, daß minimale Änderungen in der Reflektivität einer Materialprobe 3 bestimmt werden sollen. In diesem Fall ist die zu modulierende optische Eigenschaft der Probe der Brechungsindex bei der Wellenlänge λ. Der Brechungsindex kann z.B. durch eine Absorptionsänderung bei der Wellenlänge λ, aber auch durch eine Absorptionsänderung bei anderen Wellenlängen, z.B. bei anderen Wellenlängen, z.B. gemäß der bei Halbleitern geltenden Kramers-Kronig-Relationen variiert werden. Die Absorptionsänderungen können, wie schon weiter oben beschrieben, durch Änderungen der Besetzungsdichte hervorgerufen werden.

## Patentansprüche

1. Verfahren zur Messung des Absorptions- oder Reflexionsvermögens einer Materialprobe (3) bei einer vorgegebenen Wellenlänge elektromagnetischer Strahlung mit einer Strahlungsquelle (1), der im Strahlengang befindlichen Materialprobe (3) und einem Strahlungsdetektor (4) zur Detektion der von der Materialprobe transmittierten oder reflektierten Strahlung, wobei die Wellenlänge der auf die Materialprobe auftreffenden Strahlung mit einer ersten Frequenz f₁ moduliert wird und mit einem mit dem Strahlungsdetektor (4) verbundenen Lock-in-Verstärker (5) eine frequenzselektive Messung phasensensitiv durchgeführt wird, und wobei ein weiterer die Amplitude der von der Materialprobe (3) transmittierten oder reflektierten Strahlung bestimmender Parameter des Meßsystems mit einer zweiten Frequenz f₂ moduliert wird **dadurch gekennzeichnet**, daß die Strahlungsquelle ein im kHz-Bereich wellenlängenmodulierter Halbleiterlaser (1) ist, und daß der Lock-in-Verstärker (5) mit der Summen- oder der Differenzfrequenz der Frequenzen f₁ und f₂ oder ganzzahliger Vielfacher davon betrieben wird.

2. Verfahren nach Anspruch 1, **dadurch gekennzeichnet**, daß der weitere Parameter eine der optischen Eigenschaften der Materialprobe (3) bei der vorgegebenen Wellenlänge ist.

3. Verfahren nach Anspruch 2, **dadurch gekennzeichnet**, daß der weitere Parameter die Absorptionslänge der Materialprobe bei der vorgegebenen Wellenlänge ist.

4. Verfahren nach Anspruch 2, **dadurch gekennzeichnet**, daß der weitere Parameter die Besetzungsdichte absorbierender Teilchen ist.

5. Verfahren nach Anspruch 1, **dadurch gekennzeichnet**, daß die Materialprobe (3) ein Gas oder Plasma ist, und daß der weitere Parameter die Anzahl bei der vorgegebenen Wellenlänge absorbierender Teilchen im Absorptionsvolumen ist.

6. Verfahren nach Anspruch 5, **dadurch gekennzeichnet**, daß eine in das Plasma eingekoppelte Leistung mit der Frequenz (f₂) moduliert wird.

7. Vorrichtung zur Messung des Absorptions- oder Reflexionsvermögens einer Materialprobe (3) bei einer vorgegebenen Wellenlänge elektromagnetischer Strahlung mit einer Strahlungsquelle (1), einer ersten Vorrichtung (1A) zur Modulation der Wellenlänge der Strahlung bei einer ersten Frequenz f₁, der im Strahlengang befindlichen Materialprobe (3), einem Strahlungsdetektor (4), einem mit dem Strahlungsdetektor (4) gekoppelten Lock-in-Verstärker (5) zur frequenzselektiven Messung und einer zweiten Vorrichtung (6) zur Modulation eines weiteren Parameters des Meßsystems mit einer Frequenz f₂, **dadurch gekennzeichnet,** daß die Strahlungsquelle ein im kHz-Bereich wellenlängenmodulierter Halbleiterlaser (1) ist, und daß der Lock-in-Verstärker (5) dazu vorgesehen ist, bei der Summen- oder der Differenzfrequenz der Frequenzen f₁ und f₂ oder ganzzahligen Vielfachen davon betrieben zu werden.

8. Vorrichtung nach Anspruch 7, **dadurch gekennzeichnet**, daß die erste Vorrichtung (1A) ein Frequenzgenerator zur Modulation des Injektionsstroms des Halbleiterlasers ist.

9. Vorrichtung nach Anspruch 7, **dadurch gekennzeichnet**, daß die Materialprobe (3) ein Plasma ist, und daß die zweite Vorrichtung (6) ein Frequenzgenerator zur Modulation der in das Plasma eingekoppelten Leistung ist.

10. Verwendung des Verfahrens oder der Vorrichtung nach einem der vorhergehenden Ansprüche für die qualitative und quantitative Spurenbestimmung in Gasen oder Plasmen.

## Claims

1. A method of measuring the absorbing or reflecting power of a material sample (3) at a predetermined wavelength of electromagnetic radiation, with source (1) of radiation, the material sample (3) located in the beam path and a radiation detector (4) for detecting the radiation transmitted or reflected by the material sample, wherein the wavelength of the radiation impinging on the material sample is modulated with a first frequency f₁, and a frequency-selective, phase-sensitive measurement is effected with a lock-in amplifier (5) connected to the radiation detector (4), and wherein a further parameter of the measuring system determining the amplitude of the radiation transmitted or reflected by the material sample (3) is modulated with a second frequency f₂, characterized in that the radiation source is a semiconductor laser (1) modulated in wavelength in the kHz region and in that the lock-in amplifier (5) is operated at the sum or difference frequency of the frequencies f₁ and f₂ or integral multiples thereof.

2. A method according to claim 1, characterized in that the further parameter is an optical property of the material sample (3) at the predetermined wavelength.

3. A method according to claim 2, characterized in that the further parameter is the absorption length of the material sample at the predetermined wavelength.

4. A method according to claim 2, characterized in that the further parameter is the population density of absorbing particles.

5. A method according to claim 1, characterized in that the material sample (3) is a gas or plasma and in that the further parameter is the number of absorbing particles at the predetermined wavelength in the absorption volume.

6. A method according to claim 5, characterized in that a power coupled into the plasma is modulated with the frequency f₂.

7. Apparatus for measuring the absorbing or reflecting power of a material sample (3) at a predetermined wavelength of electromagnetic radiation, with a source of radiation (1), a first device (1A) for modulating the wavelength of the radiation at a first frequency f₁, the material sample (3) located in the radiation path, a radiation detector (4), a lock-in amplifier (5) coupled to the radiation detector (4) for the frequency selective measurement and a second device (6) for modulating a further parameter of the measuring system with a frequency f₂, characterized in that the radiation source is a semiconductor laser (1) modulated in wavelength in the kHz region and in that the lock-in amplifier (5) is arranged to be operated at the sum or difference frequency of the frequencies f₁ and f₂ or integral multiples thereof.

8. Apparatus according to claim 7, characterized in that the first device (1A) is a frequency generator for modulating the injection current of the semiconductor laser.

9. Apparatus according to claim 7, characterized in that the material sample (3) is a plasma and in that the second device (6) is a frequency generator for modulating the power coupled into the plasma.

10. Use of the method or the apparatus according to any of the preceding claims for qualitative and quantitative trace determination in gases or plasmas.

## Revendications

1. Procédé de mesure du pouvoir d'absorption ou de réflexion d'un rayonnement électromagnétique, d'une longueur d'onde donnée, par un échantillon de matériau (3), au moyen d'une source de rayonnement (1), de l'échantillon de matériau (3) situé sur le trajet du rayonnement et d'un détecteur de rayonnement (4) pour permettre la détection du rayonnement transmis ou réfléchi à partir de l'échantillon de matériau (3), la longueur d'onde du rayonnement tombant sur l'échantillon de matériau (3) étant modulée à une première fréquence f₁ et une mesure sélective en fréquence, sensible à la phase, étant exécutée au moyen d'un amplificateur enclenché (5) relié au détecteur de rayonnement (4), un autre paramètre du système de mesure déterminant l'amplitude du rayonnement transmis ou réfléchi à partir de l'échantillon de matériau (3) étant modulé à une seconde fréquence f₂, caractérisé en ce que la source de rayonnement est un laser à semi-conducteur (1) modulé avec une longueur d'onde comprise dans le domaine des kilohertz et en ce que l'amplificateur enclenché (5) est excité à la fréquence correspondant à la somme ou à la différence des fréquences f₁ et f₂ ou de multiples entiers de ces fréquences.

2. Procédé suivant la revendication 1 caractérisé en ce que l'autre paramètre est l'une des propriétés optiques de l'échantillon de matériau (3) pour la longueur d'onde donnée.

3. Procédé suivant la revendication 2 caractérisé en ce que l'autre paramètre est la longueur d'absorption de l'échantillon de matériau (3) pour la longueur d'onde donnée.

4. Procédé suivant la revendication 3 caractérisé en ce que l'autre paramètre est l'épaisseur d'occupation de particules absorbantes.

5. Procédé suivant la revendication 1 caractérisé en ce que l'échantillon de matériau (3) est un gaz ou un plasma et en ce que l'autre paramètre est le nombre de particules absorbantes, pour la longueur d'onde donnée, se trouvant dans le volume d'absorption.

6. Procédé suivant la revendication 5 caractérisé en ce qu'une puissance couplée au plasma est modulée à la fréquence f₂.

7. Appareil de mesure du pouvoir d'absorption ou de réflexion d'un rayonnement électromagnétique, d'une longueur d'onde donnée, par un échantillon de matériau (3), au moyen d'une source de rayonnement (1), d'un premier dispositif (1A) de modulation de la longueur d'onde du rayonnement à une première fréquence f₁, de l'échantillon de matériau (3) situé sur le trajet du rayonnement, d'un détecteur de rayonnement (4), d'un amplificateur enclenché (5) couplé au détecteur de rayonnement (4) pour une mesure sélective en fréquence et d'un second dispositif (6) de modulation d'un autre paramètre du système de mesure à une fréquence f₂, caractérisé en ce que la source de rayonnement est un laser à semi-conducteur (1) modulé avec une longueur d'onde comprise dans le domaine des kilohertz et en ce que l'amplificateur enclenché (5) est prévu de manière à être excité à la fréquence correspondant à la somme ou à la différence des fréquences f₁ et f₂ ou de multiples entiers de ces fréquences.

8. Appareil suivant la revendication 7 caractérisé en ce que le premier dispositif (1A) est un générateur de fréquence pour la modulation du courant d'injection du laser à semi-conducteur.

9. Appareil suivant la revendication 7 caractérisé en ce que l'échantillon de matériau (3) est un plasma et le second dispositif (6) est un générateur de fréquence pour la modulation de la puissance couplée au plasma.

10. Utilisation du procédé ou de l'appareil suivant l'une quelconque des revendications précédentes à la détermination qualitative et quantitative d'éléments traces dans des gaz ou plasmas.
